# FASCICULE DE BREVET EUROPEEN

(11) **EP 1 925 871 B1**
(45) Date de publication et mention de la délivrance du brevet: **14.04.2010**
(21) Numéro de dépôt: 07291377.5
(22) Date de dépôt: 19.11.2007
(51) Int. Cl.: F16L 41/06, E03F 3/04, F16L 37/24

(54) **Raccord de piquage, ensemble et assemblage correspondants**
Abzweigungsanschluss, passender Satz und Montage
Branch connection, corresponding assembly and device

(30) Priorité: 27.11.2006 FR 0610364
(43) Date de publication de la demande: 28.05.2008
(73) Titulaire: Saint-Gobain PAM, 54000 Nancy (FR)
(72) Inventeur: Vitel, Jean-Pierre, 54470 Thiaucourt-Regnieville (FR); Viatoux, Christelle, 54700 Pont-A-Mousson (FR); Gaillot, Jean-Paul, 54000 Nancy (FR)
(74) Mandataire: Domenego, Bertrand

(56) Documents cités:
- DE-U1- 20 202 456
- DE-U1- 29 710 018
- FR-A- 2 565 663
- FR-A1- 2 692 334
- FR-A1- 2 781 549
- NL-C2- 1 015 194
- US-A1- 2002 153 724

## Description

La présente invention concerne un raccord de piquage adapté pour relier une canalisation secondaire à un collecteur principal, du type comportant
- une emboîture adaptée pour recevoir une extrémité de la canalisation secondaire ;
- une selle d'appui adaptée pour s'appuyer sur une surface extérieure du collecteur principal ;
- la selle d'appui comportant des premiers évidements adaptés pour recevoir des premiers éléments de fixation qui sont adaptés pour coopérer avec une surface intérieure du collecteur principal,
- le raccord de piquage définissant un axe central de piquage.

Un raccord de ce type est connu par exemple du modèle d'utilité allemand DE-U-297 10 018. Dans ce document, les moyens de fixation de la selle d'appui sur le collecteur principal sont réalisés sous la forme d'orifices de perçage ménagés à travers la selle d'appui et le collecteur principal. Ces orifices de perçage reçoivent des boulons de serrage qui serrent la selle d'appui contre la surface extérieure du collecteur principal. Les boulons de serrage sont en outre munis de manchons ou douilles en caoutchouc destinés à assurer l'étanchéité au niveau des orifices de perçage ménagés dans le collecteur principal.

Ce raccord de piquage connu a une souplesse limitée quant à son utilisation.

L'invention a donc pour but de proposer un raccord de piquage qui ait une grande souplesse d'utilisation.

A cet effet, l'invention a pour objet un raccord de piquage tel que décrit ci-dessus, caractérisé en ce que la selle d'appui comporte des seconds évidements adaptés pour coopérer avec des seconds éléments de fixation, qui sont adaptés pour fixer d'un étrier de serrage de la selle d'appui sur le collecteur principal.

Le raccord de piquage selon l'invention peut comporter l'une ou plusieurs des caractéristiques suivantes :
- les premiers évidements sont des ouvertures traversantes, notamment des trous ;
- au moins l'un des seconds évidements comprend une fente radialement ouverte et axialement traversante par rapport à l'axe central de piquage ;
- au moins l'un des seconds évidements comprend un logement délimitant une surface de répartition de pression située du côté extérieur de la selle d'appui, la surface de répartition de pression ayant notamment une forme de cylindre partiel ;
- les seconds évidements sont décalés d'environ 90° des premiers évidements selon une direction circonférentielle par rapport à l'axe central de piquage ; et
- le raccord de piquage est fabriqué en matière plastique, notamment en polyamide.

L'invention a en outre pour objet un ensemble de piquage, caractérisé en ce qu'il comprend un raccord de piquage, notamment tel que défini précédemment.

L'ensemble de piquage selon l'invention peut comporter l'une ou plusieurs des caractéristiques suivantes :
- l'ensemble de piquage comprend pour chaque premier évidement un premier élément de fixation, notamment un boulon de fixation, adapté pour être inséré dans le premier évidement associé ;
- le raccord de piquage est un raccord de piquage tel que défini ci-dessus, il comprend des organes de répartition de pression, un étrier de serrage et des seconds éléments de fixation, notamment des boulons de fixation adaptés pour serrer l'étrier de serrage vers les organes de répartition de pression, et les organes de répartition de pression comportent une surface de répartition de pression complémentaire de la surface de répartition de pression de la selle d'appui ;
- les organes de répartition de pression sont en une matière ayant une dureté supérieure à celle de la matière du raccord de piquage ;
- l'ensemble de piquage comprend en outre des moyens de centrage adaptés pour centrer l'extrémité de la canalisation secondaire par rapport à l'axe central de piquage ;
- les moyens de centrage comprennent une bague de centrage disposée sur une extrémité de l'emboîture et adaptée pour centrer un axe central secondaire de la canalisation secondaire sur l'axe central de piquage et pour guider l'extrémité de la canalisation secondaire lors de son introduction dans l'emboîture ;
- la bague de centrage est un élément rapporté distinct de l'emboîture et est fixée à l'extrémité de l'emboîture, notamment au moyen d'une fixation du type à baïonnette ;
- les moyens de centrage comprennent des organes de centrage rapportés à la bague de centrage et adaptés pour centrer la canalisation secondaire ; et
- les organes de centrage sont des taquets de centrage fixés sur la bague de centrage, ces taquets de centrage permettant de réduire le jeu radial entre la bague de centrage et la canalisation secondaire.
   L'invention a enfin pour objet un assemblage de piquage, du type comportant
- un collecteur principal ayant une surface extérieure et une surface intérieure et dans lequel une ouverture de piquage est pratiquée,
- une canalisation secondaire ayant une extrémité,
- un raccord de piquage ou un ensemble de piquage reliant l'extrémité à l'ouverture de piquage,
caractérisé en ce que le raccord de piquage ou l'ensemble de piquage est un raccord de piquage ou un ensemble de piquage tel que défini ci-dessus.

L'assemblage de piquage peut comporter l'une ou plusieurs des caractéristiques suivantes :
- le collecteur principal est en une matière différente de la matière du raccord de piquage, notamment en fonte ; et
- la canalisation secondaire est en une matière différente du collecteur principal et/ou du raccord de piquage, notamment en matière plastique.

L'invention sera mieux comprise à la lecture de la description qui va suivre, donnée uniquement à titre d'exemple et faite en se référant aux dessins annexés, sur lesquels :
- la Figure 1 est une vue en perspective et partiellement arrachée d'un assemblage de piquage selon l'invention utilisant un premier mode de fixation;
- la Figure 2 est une vue en perspective et partiellement arrachée d'un assemblage de piquage selon l'invention utilisant un second mode de fixation ;
- la Figure 3 est une vue en perspective du raccord de piquage de l'assemblage selon l'invention ;
- la Figure 4 est une vue en perspective d'une bague de centrage de l'assemblage de piquage; et
- la Figure 5 montre un taquet de centrage.

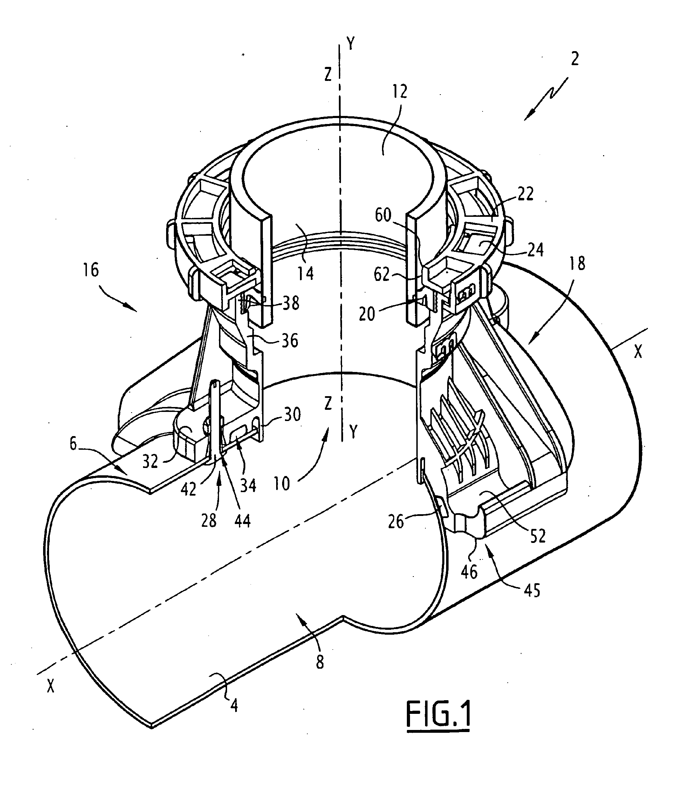

La Figure 1 montre un assemblage de piquage selon l'invention, désigné par la référence générale 2.

L'assemblage de piquage 2 comporte un collecteur principal 4 s'étendant selon un axe central principal X-X ayant une surface extérieure 6 et une surface intérieure 8. Par ailleurs, une ouverture de piquage 10 est ménagée dans la paroi du collecteur principal 4. Dans l'exemple décrit, l'ouverture de piquage 10 est de forme sensiblement carrée, mais cette ouverture peut aussi avoir une autre forme, notamment ronde ou rectangulaire.

Le collecteur principal 4 est fabriqué en fonte, mais peut également être réalisé en acier ou en une matière plastique telle que par exemple du polyéthylène ou du polychlorure de vinyle.

L'assemblage de piquage 2 comporte en outre une canalisation secondaire 12 ayant des diamètres extérieur et intérieur inférieurs au diamètre intérieur du collecteur principal 4. La canalisation secondaire 12 s'étend suivant un axe central secondaire Y-Y, perpendiculaire à l'axe central principal X-X. La canalisation secondaire 12 se termine en une extrémité formée par un bout uni 14. La canalisation secondaire 12 est fabriquée en matière plastique telle que du polychlorure de vinyle par exemple. Elle peut également être en métal, par exemple en fonte, ou en tout autre matériau.

En outre, l'assemblage de piquage 2 comprend un dispositif de prise de branchement à selle 16 permettant de raccorder la canalisation secondaire 12 au collecteur principal 4. Ce dispositif 16 forme un ensemble de piquage.

Un tel dispositif est par exemple utilisé pour permettre le déversement dans le collecteur principal 4 des eaux usées ou pluviales s'écoulant dans la canalisation secondaire 12.

Le dispositif de prise de branchement comporte un raccord de piquage 18, un premier joint d'étanchéité 20, une bague de centrage 22, des taquets de centrage 24, un second joint d'étanchéité 26, ainsi que des premiers 28 et des seconds 29 éléments de fixation servant à fixer le raccord de piquage 18 au collecteur principal 4.

Le raccord de piquage 18 s'étend selon un axe central de piquage Z-Z. Dans ce qui suit, sauf indication contraire, les expressions « axialement », « circonférentiellement » et « radialement » seront utilisées par rapport à cet axe central de piquage Z-Z.

Avantageusement, le raccord de piquage 18 est moulé d'un seul tenant en matière plastique, notamment en polyamide. De ce fait, le coût de fabrication du raccord de piquage est faible et le transport et l'installation sont facilités grâce au faible poids. Le raccord de piquage 18 peut cependant aussi être en métal, notamment en fonte ou en aluminium, ou en un autre matériau.

Le raccord de piquage 18 est muni d'un embout 30 destiné à être introduit dans l'ouverture de piquage 10 du collecteur principal 4. Cet embout 30 a une section circulaire.

Le raccord de piquage 18 comporte en outre une selle d'appui 32 adaptée pour s'appuyer sur la surface extérieure 6 du collecteur principal 4.

La selle d'appui 32 définit, à l'état monté, un côté intérieur dirigé vers le collecteur principal 4 ainsi qu'un côté extérieur tourné vers la canalisation secondaire 12.

La selle d'appui 32 est munie d'une gorge 34 recevant le second joint d'étanchéité 26 qui est interposé entre la gorge 34 et la surface extérieure 6 du collecteur principal 4, assurant ainsi l'étanchéité entre le collecteur principal 4 et le raccord de piquage 18.

Le raccord de piquage 18 comprend en outre une emboîture 36 adaptée pour recevoir le bout uni 14 de la canalisation secondaire 12. L'emboîture 36 forme une extrémité libre 38 sur laquelle est fixée la bague de centrage 22 au moyen d'une fixation du type à baïonnette. En outre, le premier joint d'étanchéité 20 est logé dans une partie étagée ménagée dans la surface intérieure de l'emboîture 36, à proximité immédiate de l'extrémité libre 38, assurant ainsi l'étanchéité entre l'emboîture 36 et le bout uni 14.

La selle d'appui 32 comporte des premiers évidements adaptés pour recevoir les premiers éléments de fixation 28. En l'occurrence, ces premiers évidements sont deux trous traversants 40 diamétralement opposés par rapport à l'axe central de piquage Z-Z et les premiers éléments de fixation 28 comprennent un premier boulon de fixation 42 pour chaque trou traversant 40.

Les premiers boulons de fixation 42 s'appliquent sur la surface intérieure 8 du collecteur principal 4 et s'étendent chacun à travers un orifice traversant 44 ménagé dans celui-ci. Dans ce cas, les premiers boulons de fixation 42 sont munis de manchons en élastomère destinés à assurer l'étanchéité au niveau des orifices 44.

Ces premiers boulons de fixation 42 permettent donc un premier mode de fixation de la selle d'appui 32 sur le collecteur principal 4.

La selle d'appui 32 comporte en outre deux seconds évidements 45 dont chacun est adapté pour coopérer avec les seconds éléments de fixation 29 de la selle d'appui 32 sur le collecteur principal 4, permettant ainsi un deuxième mode de fixation de la selle d'appui 32 sur le collecteur principal 4. Les seconds évidements 45 sont diamétralement opposés par rapport à l'axe central de piquage Z-Z.

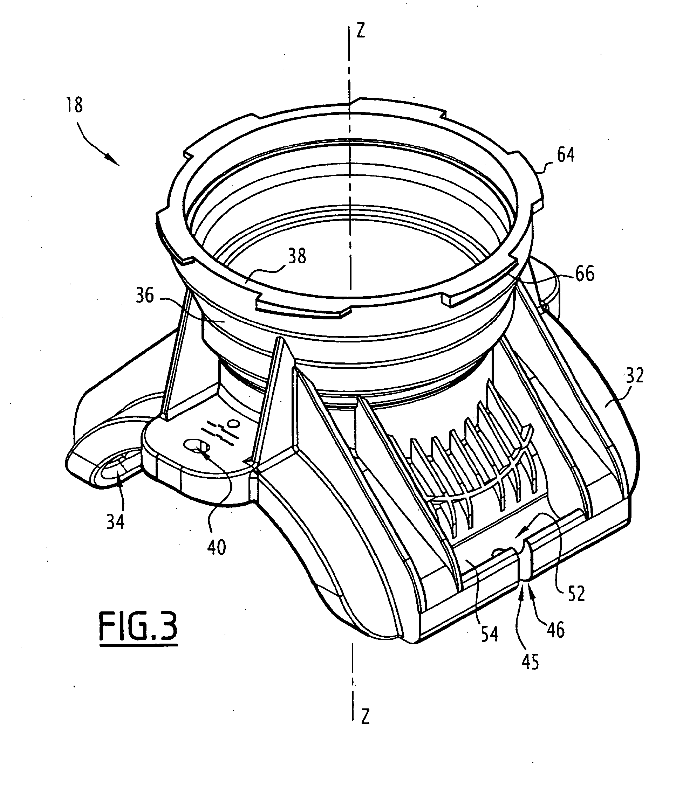

Comme ceci est visible notamment sur la Figure 3, chaque second évidement 45 comprend une fente 46 radialement ouverte et axialement traversante par rapport à l'axe central de piquage Z-Z.

Par ailleurs, chaque second évidement 45 comprend un logement 52 qui, à l'état monté, est ménagé du côté extérieur de la selle d'appui 32. Chaque logement 52 délimite une surface de répartition de pression 54. La surface de répartition de pression 54 a une forme de cylindre partiel ayant un axe propre sensiblement parallèle à l'axe central X-X du collecteur principal.

Les seconds éléments de fixation 29 utilisés pour le deuxième mode de fixation comprennent un second boulon de fixation 48 pour chaque fente 46 et un étrier de serrage 50 de la selle d'appui 32 sur le collecteur principal 4.

L'étrier de serrage 50 est fabriqué de préférence en acier inoxydable et s'étend autour du collecteur principal 4 du côté opposé à la selle d'appui 32. L'étrier de serrage 50 comporte deux extrémités dont chacune est rabattue de 90° par rapport à la partie courante de l'étrier et munie d'une ouverture de passage pour l'un des seconds boulons de fixation 48.

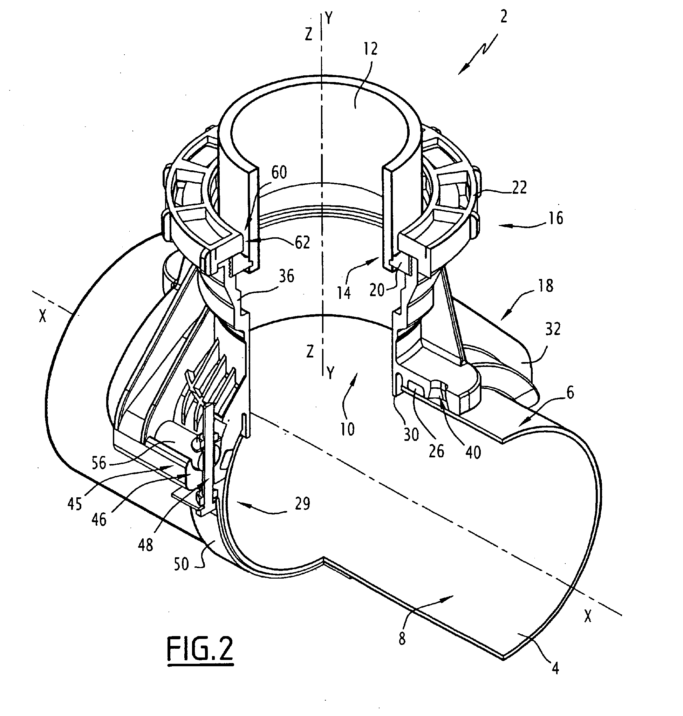

Les seconds éléments de fixation 29 utilisés pour ce deuxième mode de fixation comprennent en outre des organes de répartition de pression 56 sous la forme de cylindres de répartition de pression en métal reçus par les logements 52. La surface extérieure des cylindres de répartition de pression 56 est complémentaire de la surface de répartition de pression 54. En variante, d'autres formes complémentaires des surfaces de répartition de pression peuvent être envisagées. Comme ceci est visible sur la Figure 2, chaque cylindre de répartition de pression 56 est muni d'un orifice de passage pour l'un des seconds boulons de fixation 48. Mis à part l'orifice de passage, chaque cylindre de répartition de pression 56 est un cylindre massif.

D'une manière générale, les organes de répartition de pression 56 sont en une matière ayant une dureté supérieure de celle de la matière du raccord de piquage 18. Les organes de répartition de pression 56 permettent de répartir la pression exercée par les seconds boulons de fixation 48 sur une surface relativement importante de la selle d'appui 32 et évitent ainsi sa détérioration lors du serrage de la selle sur le collecteur principal. Ceci est particulièrement avantageux lorsque la selle d'appui 32 est fabriquée en matière plastique.

A cet effet, il est préférable que la surface de répartition de pression soit relativement importante. De préférence, elle est supérieure à au moins trois fois la surface d'une section transversale de l'écrou du deuxième boulon 48, cette.section étant prise transversalement à l'axe propre de l'écrou.

Les fentes 46 facilitent le montage sur chantier, notamment dans une tranchée, car après avoir mis en place l'étrier de serrage 50 sous le collecteur principal 4 et après introduction des tiges des seconds boulons 48 dans les ouvertures de passage de l'étrier de serrage 50 et dans les orifices de passage des cylindres de répartition de pression 56 et après prémontage d'écrous de serrage sur l'extrémité filetée des tiges des seconds boulons 48, il est alors aisé de faire pénétrer la tige des boulons 48 dans ces fentes 46, puis de serrer les écrous après mise en place des cylindres 56 dans les logements 52 associés.

Comme ceci est visible sur la Figure 3, les premiers évidements 40 sont décalés des seconds évidements 45 de 90° selon la direction circonférentielle autour de l'axe de piquage Z-Z.

La bague de centrage 22 et les taquets de centrage 24 sont adaptés pour centrer l'axe central Y-Y de la canalisation secondaire 12 et son bout uni 14 par rapport à l'axe central Z-Z du raccord de piquage. Ils assurent le guidage du bout uni 14 de la canalisation secondaire 12 lors de son introduction dans l'emboîture 36 ainsi que son centrage par rapport au premier joint d'étanchéité 20. Ils empêchent ainsi l'excentration de la canalisation secondaire 12 et les défauts d'étanchéité qui pourraient en résulter. La bague de centrage 22 assure par ailleurs aussi le maintien en place de la bague d'étanchéité 20 dans la partie étagée de logement ménagée à l'intérieur de l'emboîture 36.

La bague de centrage 22 comporte à cet effet un chanfrein d'entrée 60 et une surface intérieure cylindrique 62 dont le diamètre est supérieur au diamètre extérieur de la canalisation secondaire 12 représentée sur les Figures 1 et 2.

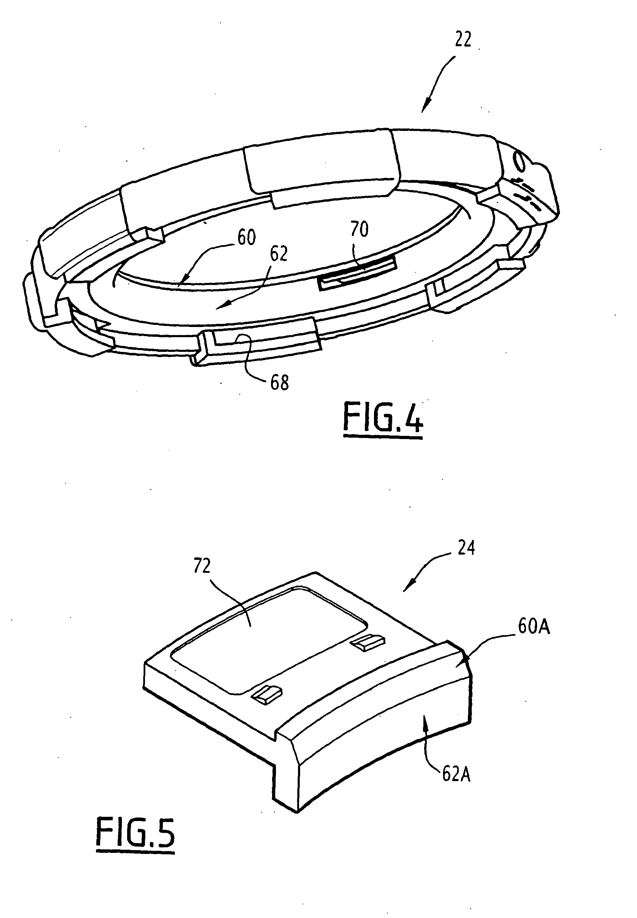

La bague de centrage 22 est un élément rapporté distinct de l'emboîture 36 et est fixée à l'extrémité libre 38 de l'emboîture 36 au moyen d'une fixation de type à baïonnette. A cet effet, comme ceci est visible sur la Figure 3, l'emboîture 36 comporte des saillies 64 s'étendant radialement vers l'extérieur et sur une partie circonférentielle autour de l'axe Z-Z. Chaque saillie 64 a une surface de rampe 66 destinée à coopérer avec une gorge complémentaire 68 de la bague de centrage 22 (voir Figure 4).

Avantageusement, la bague de centrage 22 comporte des logements 70 radialement ouverts vers l'intérieur. Chacun des logements 70 est adapté pour recevoir le cas échéant un taquet de centrage 24. Les taquets de centrage 24 ont un corps 72 par lequel ils sont insérables radialement vers l'extérieur dans les logements 70 jusqu'à une position de butée. Dans cette position de butée, ils dépassent de la surface intérieure 62 de la bague 22 radialement vers l'intérieur, formant ainsi des moyens de réduction du jeu radial entre la bague de centrage 22 et la canalisation secondaire 12 lorsque ce jeu est relativement important (Figures 1 et 2). Les taquets 24 comprennent une surface de chanfrein 60A et une surface de cylindre partiel 62A et sont ainsi adaptés pour guider et centrer la canalisation secondaire 12 représentée sur les Figures 1 et 2. Bien entendu, lorsque le jeu radial entre la bague de centrage 22 et la canalisation secondaire 12 est faible, les taquets de centrage 24 ne sont pas nécessaires et la bague de centrage 22 assure alors seule le centrage da la canalisation secondaire 12.

Alternativement, en lieu et place de la bague de centrage 22 munie de taquets de centrage 24 des Figures 1 et 2, on peut également utiliser une autre bague de centrage (non représentée) qui est identique à la bague de centrage 22 montrée sur la Figure 4, à ceci près que le diamètre de sa surface intérieure cylindrique est alors réduit par rapport à celui de la bague de centrage 22 des Figures 1 et 2, permettant ainsi de rattraper le jeu radial entre la bague de centrage et la canalisation secondaire 12. Une telle bague de centrage pourra par ailleurs être dépourvue de logements 70 de réception de taquets de centrage.

Ainsi, la bague de centrage 22, le cas échéant munie de taquets de centrage, sera choisie en fonction des diamètres extérieurs de la canalisation secondaire 12.

La bague de centrage 22 et les taquets de centrage 24 sont de préférence réalisés en une matière plastique rigide telle que du polyamide par exemple.

Il est à noter que les caractéristiques de l'invention décrites ci-dessus en liaison avec la bague de centrage 22 et les taquets de centrage 24 sont indépendantes des caractéristiques liées à l'utilisation de deux modes de fixation de la selle d'appui 32 sur le collecteur principal 4.

## Revendications

1. Raccord de piquage (18) adapté pour relier une canalisation secondaire (12) à un collecteur principal (4), du type comportant
- une emboîture (36) adaptée pour recevoir une extrémité (14) de la canalisation secondaire (12);
- une selle d'appui (32) adaptée pour s'appuyer sur une surface extérieure (6) du collecteur principal (4);
- la selle d'appui (32) comportant des premiers évidements (40) adaptés pour recevoir des premiers éléments de fixation (28) qui sont adaptés pour coopérer avec une surface intérieure (8) du collecteur principal (4),
- le raccord de piquage définissant un axe central de piquage (Z-Z),
**caractérisé en ce que**
la selle d'appui (32) comporte des seconds évidements (45) adaptés pour coopérer avec des seconds éléments de fixation (29), qui sont adaptés pour fixer un étrier de serrage (50) de la selle d'appui (32) sur le collecteur principal.

2. Raccord de piquage selon la revendication 1, **caractérisé en ce que** les premiers évidements sont des ouvertures traversantes, notamment des trous (40).

3. Raccord de piquage selon la revendication 1 ou 2, **caractérisé en ce qu'**au moins l'un des seconds évidements (45) comprend une fente (46) radialement ouverte et axialement traversante par rapport à l'axe central de piquage (Z-Z).

4. Raccord de piquage selon l'une quelconque des revendications 1 à 3, **caractérisé en ce qu'**au moins l'un des seconds évidements (45) comprend un logement (52) délimitant une surface de répartition de pression (54) située du côté extérieur de la selle d'appui, la surface de répartition de pression (54) ayant notamment une forme de cylindre partiel.

5. Raccord de piquage selon l'une quelconque des revendications 1 à 4, **caractérisé en ce que** les seconds évidements (45) sont décalés d'environ 90° des premiers évidements (40) selon une direction circonférentielle par rapport à l'axe central de piquage (Z-Z).

6. Raccord de piquage selon l'une quelconque des revendications 1 à 5, **caractérisé en ce qu'**il est fabriqué en matière plastique, notamment en polyamide.

7. Ensemble de piquage, **caractérisé en ce qu'**il comprend un raccord de piquage selon l'une quelconque des revendications précédentes.

8. Ensemble de piquage selon la revendication 7, **caractérisé en ce qu'**il comprend pour chaque premier évidement (40) un premier élément de fixation (28), notamment un boulon de fixation (42), adapté pour être inséré dans le premier évidement associé.

9. Ensemble de piquage selon la revendication 7 ou 8, **caractérisé en ce que** le raccord de piquage est un raccord de piquage selon au moins la revendication 4, **en ce qu'**il comprend des organes de répartition de pression (56), un étrier de serrage (50) et des seconds éléments de fixation (29), notamment des boulons de fixation (48) adaptés pour serrer l'étrier de serrage vers les organes de répartition de pression (56), et **en ce que** les organes de répartition de pression comportent une surface de répartition de pression complémentaire de la surface de répartition de pression (54) de la selle d'appui.

10. Ensemble de piquage selon la revendication 9, **caractérisé en ce que** les organes de répartition de pression (56) sont en une matière ayant une dureté supérieure à celle de la matière du raccord de piquage (18).

11. Ensemble de piquage selon l'une quelconque des revendications 7 à 10, **caractérisé en ce qu'**il comprend en outre des moyens de centrage (22, 24) adaptés pour centrer l'extrémité (14) de la canalisation secondaire (12) par rapport à l'axe central de piquage (Z-Z).

12. Ensemble de piquage selon la revendication 11, **caractérisé en ce que** les moyens de centrage comprennent une bague de centrage (22) disposée sur une extrémité (38) de l'emboîture (36) et adaptée pour centrer un axe central secondaire (Y-Y) de la canalisation secondaire sur l'axe central de piquage (Z-Z) et pour guider l'extrémité (14) de la canalisation secondaire (12) lors de son introduction dans l'emboîture (36).

13. Ensemble de piquage selon la revendication 12, **caractérisé en ce que** la bague de centrage (22) est un élément rapporté distinct de l'emboîture (36) et est fixée à l'extrémité (38) de l'emboîture (36), notamment au moyen d'une fixation du type à baïonnette.

14. Ensemble de piquage selon la revendication 12 ou 13, **caractérisé en ce que** les moyens de centrage comprennent des organes de centrage rapportés (24) à la bague de centrage (22) et adaptés pour centrer la canalisation secondaire (12).

15. Ensemble de piquage selon la revendication 14, **caractérisé en ce que** les organes de centrage sont des taquets de centrage (24) fixés sur la bague de centrage (22), ces taquets de centrage permettant de réduire le jeu radial entre la bague de centrage et la canalisation secondaire (12).

16. Assemblage de piquage, du type comportant
- un collecteur principal (4) ayant une surface extérieure (6) et une surface intérieure (8) et dans lequel une ouverture de piquage (10) est pratiquée,
- une canalisation secondaire (12) ayant une extrémité (14),
- un raccord de piquage ou un ensemble de piquage reliant l'extrémité (14) à l'ouverture de piquage (10),
**caractérisé en ce que** le raccord de piquage ou l'ensemble de piquage est un raccord de piquage ou un ensemble de piquage selon l'une quelconque des revendications précédentes.

17. Assemblage de piquage selon la revendication 16, **caractérisé en ce que** le collecteur principal (4) est en une matière différente de la matière du raccord de piquage (18), notamment en fonte.

18. Assemblage de piquage selon l'une des revendications 16 ou 17, **caractérisé en ce que** la canalisation secondaire (12) est en une matière différente du collecteur principal et/ou du raccord de piquage, notamment en matière plastique.

## Claims

1. Branch connection (18) arranged to connect a secondary duct (12) to a main collecting conduit (4), of a type comprising
- a socket (36) arranged to receive an end (14) of the secondary duct (12);
- a supporting saddle (32) arranged to rest on an outer surface (6) of the main collecting conduit (4);
- the supporting saddle (32) including first free spaces (40) arranged to receive first fixing elements (28) which are arranged to co-operate with an inner surface (8) of the main collecting conduit (4),
- the branch connection defining a central branch axis (Z-Z),
**characterised in that**
the supporting saddle (32) includes second free spaces (45) arranged to co-operate with second fixing elements (29) which are arranged to fix a clamping yoke (50) of the supporting saddle (32) on the main collecting conduit.

2. Branch connection according to claim 1, **characterised in that** the first free spaces are through-openings, especially holes (40).

3. Branch connection according to claim 1 or 2, **characterised in that** at least one of the second free spaces (45) comprises a slot (46) that is open radially and that extends through axially with respect to the central branch axis (Z-Z).

4. Branch connection according to any one of claims 1 to 3, **characterised in that** at least one of the second free spaces (45) has a seating (52) delimiting a pressure-distributing surface (54) located on the outside of the supporting saddle, the pressure-distributing surface (54) especially having the shape of part of a cylinder.

5. Branch connection according to any one of claims 1 to 4, **characterised in that** the second free spaces (45) are offset by about 90° from the first free spaces (40) in a circumferential direction with respect to the central branch axis (Z-Z).

6. Branch connection according to any one of claims 1 to 5, **characterised in that** it is made of plastics material, especially polyamide.

7. Branch ensemble, **characterised in that** it includes a branch connection according to any one of the preceding claims.

8. Branch ensemble according to claim 7, **characterised in that** it includes, for each first free space (40), a first fixing element (28), especially a fixing bolt (42), arranged to be inserted in the associated first free space.

9. Branch ensemble according to claim 7 or 8, **characterised in that** the branch connection is a branch connection according to at least claim 4, **in that** it includes pressure-distributing members (56), a clamping yoke (50) and second fixing elements (29), especially fixing bolts (48), arranged to clamp the clamping yoke towards the pressure-distributing members (56), and **in that** the pressure-distributing members include a pressure-distributing surface complementary to the pressure-distributing surface (54) of the supporting saddle.

10. Branch ensemble according to claim 9, **characterised in that** the pressure-distributing members (56) are of a material having a hardness greater than that of the material of the branch connection (18).

11. Branch ensemble according to any one of claims 7 to 10, **characterised in that** it additionally comprises centring means (22, 24) arranged to centre the end (14) of the secondary duct (12) with respect to the central branch axis (Z-Z).

12. Branch ensemble according to claim 11, **characterised in that** the centring means comprise a centring ring (22) disposed on an end (38) of the socket (36) and arranged to centre a secondary central axis (Y-Y) of the secondary duct on the central branch axis (Z-Z) and to guide the end (14) of the secondary duct (12) when it is introduced into the socket (36).

13. Branch ensemble according to claim 12, **characterised in that** the centring ring (22) is a mounted element separate from the socket (36) and is fixed to the end (38) of the socket (36), especially by means of a bayonet-type fixing.

14. Branch ensemble according to claim 12 or 13, **characterised in that** the centring means comprise centring members (24) mounted on the centring ring (22) and arranged to centre the secondary duct (12).

15. Branch ensemble according to claim 14, **characterised in that** the centring members are centring dogs (24) fixed to the centring ring (22), these centring dogs making it possible to reduce the radial play between the centring ring and the secondary duct (12).

16. Branch assembly of a type comprising
- a main collecting conduit (4) having an outer surface (6) and an inner surface (8) and in which a branch opening (10) has been made,
- a secondary duct (12) having an end (14),
- a branch connection or branch ensemble connecting the end (14) to the branch opening (10),
**characterised in that** the branch connection or branch ensemble is a branch connection or branch ensemble according to any one of the preceding claims.

17. Branch assembly according to claim 16, **characterised in that** the main collecting conduit (4) is of a material that is different to the material of the branch connection (18), especially of cast iron.

18. Branch assembly according to one of claims 16 or 17, **characterised in that** the secondary duct (12) is of a material that is different to the main collecting conduit and/or the branch connection, especially of plastics material.

## Patentansprüche

1. Anstichanschluss (18), der dazu ausgelegt ist, eine sekundäre Rohrleitung (12) mit einem Hauptsammler (4) zu verbinden, des Typs, der umfasst:
- einen Einsteckabschnitt (36), der dazu ausgelegt ist, ein Ende (14) der sekundären Rohrleitung (12) aufzunehmen;
- eine Abstützplatte (32), die dazu ausgelegt ist, auf einer äußeren Oberfläche (6) des Hauptsammlers (4) aufzuliegen;
- wobei die Abstützplatte (32) erste Aussparungen (40) enthält, die dazu ausgelegt sind, erste Befestigungselemente (28) aufzunehmen, die dazu ausgelegt sind, mit einer inneren Oberfläche (8) des Hauptsammlers (4) zusammenzuwirken,
- wobei der Anstichanschluss eine mittige Anstichachse (Z-Z) definiert,
**dadurch gekennzeichnet, dass**
die Abstützplatte (32) zweite Aussparungen (45) aufweist, die dazu ausgelegt sind, mit zweiten Befestigungselementen (29) zusammenzuwirken, die dazu ausgelegt sind, einen Klemmbügel (50) der Abstützplatte (32) am Hauptsammler zu befestigen.

2. Anstichanschluss nach Anspruch 1, **dadurch gekennzeichnet, dass** die ersten Aussparungen Durchgangsöffnungen, insbesondere Löcher (40) sind.

3. Anstichanschluss nach Anspruch 1 oder 2, **dadurch gekennzeichnet, dass** wenigstens eine der zweiten Aussparungen (45) einen Schlitz (46) aufweist, der radial offen ist und in Bezug auf die mittige Anstichachse (Z-Z) axial verläuft.

4. Anstichanschluss nach einem der Ansprüche 1 bis 3, **dadurch gekennzeichnet, dass** wenigstens eine der zweiten Aussparungen (45) einen Aufnahmesitz (52) aufweist, der eine Druckverteilungsoberfläche (54) begrenzt, die auf der Außenseite der Abstützplatte vorhanden ist, wobei die Druckverteilungsoberfläche (54) insbesondere eine teilzylindrische Form hat.

5. Anstichanschluss nach einem der Ansprüche 1 bis 4, **dadurch gekennzeichnet, dass** die zweiten Aussparungen (45) von den ersten Aussparungen (40) in einer Umfangsrichtung in Bezug auf die mittige Anstichachse (Z-Z) um etwa 90° versetzt sind.

6. Anstichanschluss nach einem der Ansprüche 1 bis 5, **dadurch gekennzeichnet, dass** er aus Kunststoff, insbesondere aus Polyamid hergestellt ist.

7. Anstichanordnung, **dadurch gekennzeichnet, dass** sie einen Anstichanschluss nach einem der vorhergehenden Ansprüche umfasst.

8. Anstichanordnung nach Anspruch 7, **dadurch gekennzeichnet, dass** sie für jede erste Aussparung (40) ein erstes Befestigungselement (28), insbesondere einen Befestigungsbolzen (42) umfasst, der dazu ausgelegt ist, in die zugeordnete erste Aussparung eingesteckt zu werden.

9. Anstichanordnung nach Anspruch 7 oder 8, **dadurch gekennzeichnet, dass** der Anstichanschluss ein Anstichanschluss wenigstens nach Anspruch 4 ist, dass sie Druckverteilungsorgane (56), einen Klemmbügel (50) und zweite Befestigungselemente (29), insbesondere Befestigungsbolzen (48), die dazu ausgelegt sind, den Klemmbügel gegen die Druckverteilungsorgane (56) zu drängen, umfasst und dass die Druckverteilungsorgane eine zu der Druckverteilungsoberfläche (54) der Abstützplatte komplementäre Druckverteilungsoberfläche aufweisen.

10. Anstichanordnung nach Anspruch 9, **dadurch gekennzeichnet, dass** die Druckverteilungsorgane (56) aus einem Werkstoff sind, der eine Härte besitzt, die größer als jene des Werkstoffs des Anstichanschlusses (18) ist.

11. Anstichanordnung nach einem der Ansprüche 7 bis 10, **dadurch gekennzeichnet, dass** sie außerdem Zentriermittel (22, 24) umfasst, die dazu ausgelegt sind, das Ende (14) der sekundären Rohrleitung (12) in Bezug auf die mittige Anstichachse (Z-Z) zu zentrieren.

12. Anstichanordnung nach Anspruch 11, **dadurch gekennzeichnet, dass** die Zentriermittel einen Zentrierring (22) umfassen, der an einem Ende (38) des Einsteckabschnitts (36) angeordnet ist und dazu ausgelegt ist, eine sekundäre Mittelachse (Y-Y) der sekundären Rohrleitung auf die mittige Anstichachse (Z-Z) zu zentrieren und um das Ende (14) der sekundären Rohrleitung (12) bei ihrer Einführung in den Einsteckabschnitt (36) zu führen.

13. Anstichanordnung nach Anspruch 12, **dadurch gekennzeichnet, dass** der Zentrierring (22) ein von dem Einsteckabschnitt (36) verschiedenes, angefügtes Element ist und am Ende (38) des Einsteckabschnitts (36) insbesondere mittels einer Befestigung des Bajonett-Typs befestigt ist.

14. Anstichanordnung nach Anspruch 12 oder 13, **dadurch gekennzeichnet, dass** die Zentriermittel Zentrierorgane (24) umfassen, die an den Zentrierring (22) angefügt sind und dazu ausgelegt sind, die sekundäre Rohrleitung (12) zu zentrieren.

15. Anstichanordnung nach Anspruch 14, **dadurch gekennzeichnet, dass** die Zentrierorgane Zentriernasen (24) sind, die am Zentrierring (22) befestigt sind, wobei diese Zentriernasen ermöglichen, das radiale Spiel zwischen dem Zentrierring und der sekundären Rohrleitung (12) zu verringern.

16. Anstichinstallation des Typs, der umfasst:
- einen Hauptsammler (4) mit einer äußeren Oberfläche (6) und einer inneren Oberfläche (8), in dem eine Anstichöffnung (10) ausgebildet ist,
- eine sekundäre Rohrleitung (12) mit einem Ende (14),
- einen Anstichanschluss oder eine Anstichanordnung, der bzw. die das Ende (14) mit der Anstichöffnung (10) verbindet,
**dadurch gekennzeichnet, dass** der Anstichanschluss oder die Anstichanordnung ein Anstichanschluss bzw. eine Anstichanordnung nach einem der vorhergehenden Ansprüche ist.

17. Anstichinstallation nach Anspruch 16, **dadurch gekennzeichnet, dass** der Hauptsammler (4) aus einem Werkstoff besteht, der von dem Werkstoff des Anstichanschlusses (18) verschieden ist und insbesondere aus Gusseisen besteht.

18. Anstichinstallation nach einem der Ansprüche 16 oder 17, **dadurch gekennzeichnet, dass** die sekundäre Rohrleitung (12) aus einem anderen Werkstoff als der Hauptsammler und/oder der Anstichanschluss ist, insbesondere aus Kunststoff.
